# EUROPÄISCHE PATENTSCHRIFT

(11) **EP 2 944 504 B1**
(45) Veröffentlichungstag und Bekanntmachung des Hinweises auf die Patenterteilung: **02.08.2023**
(21) Anmeldenummer: 15160866.8
(22) Anmeldetag: 25.03.2015
(51) Int. Cl.: B60L 15/20, G01C 21/36

(54) **Vorrichtung und Verfahren zur Darstellung einer Betriebsstrategie eines Hybridfahrzeuges**
DEVICE AND METHOD FOR REPRESENTING AN OPERATING STRATEGY OF A HYBRID VEHICLE
DISPOSITIF ET PROCÉDÉ DE PRÉSENTATION D'UNE STRATÉGIE DE FONCTIONNEMENT D'UN VÉHICULE HYBRIDE

(30) Priorität: 04.04.2014 DE 102014206540
(43) Veröffentlichungstag der Anmeldung: 18.11.2015
(73) Patentinhaber: Volkswagen Aktiengesellschaft, 38440 Wolfsburg (DE)
(72) Erfinder: Breuel, Matthias, 68163 Mannheim (DE); Bellin, Jan, 30627 Hannover (DE)
(74) Vertreter: Patentanwälte Bressel und Partner mbB

(56) Entgegenhaltungen:
- EP-A1- 2 596 977
- EP-A2- 2 441 634
- DE-A1-102008 061 512
- DE-A1-102010 039 075
- US-A1- 2006 052 918
- US-A1- 2010 010 697
- US-A1- 2010 250 059

## Beschreibung

Die Erfindung betrifft eine Vorrichtung und ein Verfahren zur Darstellung einer Betriebsstrategie eines Hybridfahrzeugs.

Bei bekannten Hybridfahrzeugen ist es bekannt, dass der Nutzer mittels eines Tasters manuell auf reinen elektrischen Betrieb umschalten kann. Ansonsten wird in einer Steuereinheit abhängig von bestimmten Parametern wie beispielsweise Lastanforderungen eine Betriebsart festgelegt. Je nach Hybridfahrzeug können dabei verschiedene Betriebsarten vorkommen wie beispielsweise reines elektrisches Fahren, verbrennungsmotorisches Fahren mit elektrischer Unterstützung, verbrennungsmotorisches Fahren mit Laden der Batterie, verbrennungsmotorisches Fahren mit Halten des Ladezustandes der Batterie oder Boosten.

Aus der DE 10 2009 046 568 A1 ist ein Verfahren zum Betrieb von Fahrzeugen mit elektrischem Antrieb bekannt, wobei der elektrische Antrieb mit einer zurückzulegenden Fahrtstrecke abhängigen Regelungsstrategie betrieben wird. Das Fahrzeug kann ein Elektrofahrzeug oder ein Hybridfahrzeug sein. Dabei wird der elektrische Antrieb selbst durch die fahrstreckenabhängige Regelungsstrategie betrieben und nicht lediglich eine Auswahl zwischen einer Verbrennungskraftmaschine und einer Elektromaschine getroffen. Die zurückzulegende Fahrtstrecke kann beispielsweise durch Zieleingabe in ein Navigationssystem ermittelt und einem Steuersystem zum Betrieb des mindestens einen Energiespeichers (z.B. die Traktionsbatterie) zur Verfügung gestellt werden. Dabei ist weiter eine Kommunikationsverbindung zwischen einem Fahrdynamik-Prediktor und einem Navigationssystem vorgesehen. Durch Zieleingabe in das Navigationssystem kann die Fahrstrecke mit Fahrgewohnheiten eines Kunden simuliert werden. Damit lassen sich beliebig genaue Aufteilungen von Fahrtstrecke in Teilstrecken mit zugehörigem Straßenbewertungsindex realisieren und ein kundenspezifisches Lastprofil zusammensetzen und vorausberechnen. Dies erlaubt eine frühzeitige, vorausschauende Bereitstellung von Antriebsenergie. Die intelligente Antriebsregelung führt in einer beispielhaften Ausführungsform einen Abgleich mit Ladezuständen durch und liefert dem Fahrer bei Energiemangel ein Feedback, wie weit der Fahrer noch fahren kann. Optional kann dies mit einem Navigationssystem kombiniert werden, um die nächste Stromtankstelle aufzufinden und dem Fahrer mitzuteilen. Eine andere beispielhafte Ausführungsform sieht eine Vorausschau-Strategie vor. Die Vorausschau-Strategie liefert und zeigt stets eine der Situation angepasste, vorausschauende optimale Antriebsstrategie an als eine Empfehlung/Orientierung für den Fahrer.

Aus der DE 10 2010 010 445 A1 ist eine Anzeigevorrichtung eines Hybridfahrzeugs bekannt, die gesteuert über eine Navigationseinrichtung eine zu einer aktuellen Fahrzeugposition korrespondierende Landkarte anzeigt. Abhängig von der zur Verfügung stehenden Kraftstoffmenge und abhängig von der zur Verfügung stehenden elektrischen Energie sind in die Karte mindestens zwei Bereiche einblendbar, nämlich ein erster Bereich, der unter Ausnutzung der zur Verfügung stehenden elektrischen Energie bei rein elektromotorischer Fahrt erreichbar ist, und ein zweiter Bereich, der zusätzlich unter Ausnutzung der zur Verfügung stehenden Kraftstoffmenge bei rein verbrennungsmotorischer und/oder kombinierter elektro- und verbrennungsmotorischer Fahrt erreichbar ist.

Aus der DE 10 2010 039 075 A1 ist eine Energiemengeninformationsausgabevorrichtung bekannt, bei der Ladestationen und deren Verfügbarkeit einem Fahrer zur Verfügung gestellt werden.

Aus der EP 2 441 634 A2 ist ein Betriebsverfahren für ein Fahrzeugassistenzsystem zur Unterstützung eines Fahrzeugführers eines Kraftfahrzeugs bei einer Senkung eines Kraftstoffverbrauchs des Kraftfahrzeugs bekannt, wobei das Verfahren folgende Schritte aufweist:
- Bestimmung einer Fahrempfehlung zur Senkung des Kraftstoffverbrauchs,
- Ermitteln mindestens einer verbrauchsrelevanten Straßeneigenschaft einer Straße auf der bevorstehenden Fahrtroute des Kraftfahrzeugs, die den Kraftstoffverbrauch beeinflusst,
- Bestimmung der Fahrempfehlung in Abhängigkeit von der verbrauchsrelevanten Straßeneigenschaft und
- Unterrichtung des Fahrzeugführers über die Fahrempfehlung, wobei vorzugsweise zusätzlich der Fahrzeugführer über den Grund der Empfehlung informiert wird. Dabei kann die Fahrempfehlung auch automatisch durch eine Fahrzeuggeschwindigkeitsregelanlage ausgeführt werden.

Aus der US 2010/0250059 A1 ist ein Verfahren für Fahrempfehlungen zur Einsparung von Kraftstoff bekannt, das beispielsweise für ein Hybridfahrzeug Anwendung findet. Dabei werden die Fahrempfehlungen an das Verhalten des Kraftfahrzeugführers angepasst.

Aus der US 2006/0052918 A1 ist ein Verfahren zur Fernüberwachung von Fahrzeugen bekannt, die verschiedene automatisch gewählte Betriebsarten aufweisen können. Dabei können die Fahrzeuge auch als Hybridfahrzeuge ausgebildet sein. Jedes Fahrzeug hat dabei die Möglichkeit, die automatisch gewählte Betriebsart außer Kraft zu setzen und einen Notbetrieb zu wählen.

Aus der EP 2 596 977 A1 ist ein Verfahren zur Bestimmung der Reichweite von batteriebetriebenen Elektrofahrzeugen und zur Bestimmung und Aufrechterhaltung der Lebensdauer der Batterien bekannt, wobei verschiedene Modelle verwendet werden, um die für einen Streckenabschnitt erforderliche Leistung zu berechnen. Weiter werden einem Fahrer Vorschläge für die Fahrweise bzw. Empfehlungen für Streckenänderungen unterbreitet.

Aus der US 2010/0010697 A1 ist eine gattungsgemäße Vorrichtung zur Darstellung einer Betriebsstrategie eines Hybridfahrzeuges bekannt.

Aus der DE 10 2010 039 075 A1 ist eine Energiemengeninformationsausgabevorrichtung zum Ausgeben von Informationen bekannt, um eine verbleibende elektrische Antriebsenergie anzuzeigen, wobei die Vorrichtung aufweist: einen Abfahrtspunktinformationserlangungsabschnitt, der Abfahrtspunktinformationen erlangt, die einen Abfahrtspunkt des Fahrzeugs angeben; einen Zielpunktinformationserlangungsabschnitt, der Zielpunktinformationen erlangt, die einen Zielpunkt des Fahrzeugs angeben; einen Restenergiemengeninformationserlangungsabschnitt, der Restenergiemengeninformationen erfasst, die eine Menge in der Batterie verbleibender elektrischer Energie angeben; einen Sollgesamtenergiemengenberechnungsabschnitt, der eine erforderliche gesamte elektrische Energiemenge basierend auf den Abfahrtspunktinformationen und den Zielpunktinformationen erfasst, wobei die erforderliche gesamte elektrische Energiemenge eine Menge elektrischer Energie angibt, die für das Fahrzeug erforderlich ist, um vom Abfahrtspunkt zum Zielpunkt zu fahren; einen Ausgabeabschnitt, der Informationen ausgibt; und einen Steuerabschnitt, der überprüft, ob die verbleibende elektrische Energiemenge, die durch die Restenergiemengeninformation angegeben wird, am Abfahrtspunkt geringer ist als die erforderliche gesamte Energiemenge, und den Ausgabeabschnitt betreibt, um Mangelinformationen, die angeben, dass die verbleibende elektrische Energiemenge der Batterie nicht ausreicht, auszugeben, wenn die verbleibende elektrische Energiemenge geringer ist als die erforderliche gesamte elektrische Energiemenge.

Aus der DE 10 2008 061 512 A1 ist ein Verfahren zur Steuerung eines Hybridantriebs eines Fahrzeugs bekannt, wobei der Hybridantrieb mindestens einen Verbrennungsmotor und einen Elektromotor umfasst, welcher im Bremsbetrieb als Generator betrieben wird und elektrische Energie in einem Energiespeicher speichert und im Antriebsbetrieb für den Fahrzeugantrieb genutzt wird, wobei Funktionen des Verbrennungsmotors und des Elektromotors mittels einer Steuereinheit gesteuert werden, wobei die Steuerung der Funktionen des Verbrennungsmotors und des Elektromotors in Abhängigkeit einer erkannten Verkehrssituation und/oder von Karteninformationen ausgeführt wird. In einer Ausführungsform des Verfahrens wird ein solches verkehrssituationsabhängiges und/oder karteninformationsabhängiges Zu- und Abschalten bzw. Dimensionieren des Elektroantriebs dem Fahrer in einer Weise z.B. auf dem Display des Navigationssystems und/oder einem separaten Display angezeigt, dass der Zusammenhang zwischen aktuellem Verkehrszustand und Antriebsart dargestellt wird.

Ein Problem bei der automatischen Bestimmung von Regelungs- und/oder Betriebsstrategien ist, dass für den Fahrer das Verhalten seines Fahrzeugs für ihn nicht immer nachvollziehbar ist und dieser nicht weiß, ob das Verhalten gewollt oder auf einem Fehler beruht. Dies kann zu unnötigen Eingriffen des Fahrers in die Betriebsstrategie führen.

Der Erfindung liegt das technische Problem zugrunde, eine Vorrichtung zur Darstellung einer Betriebsstrategie eines Hybridfahrzeuges zu schaffen sowie ein Verfahren zur Darstellung einer Betriebsstrategie eines Hybridfahrzeuges zur Verfügung zu stellen, mittels derer die Gefahr unnötiger Eingriffe in die Betriebsstrategie reduziert wird.

Die Lösung des technischen Problems ergibt sich durch die Vorrichtung mit den Merkmalen des Anspruchs 1 sowie das Verfahren mit den Merkmalen des Anspruchs 7. Weitere vorteilhafte Ausgestaltungen der Erfindung ergeben sich aus den Unteransprüchen.

Die Vorrichtung zur Darstellung einer Betriebsstrategie eines Hybridfahrzeugs umfasst eine Auswerteeinheit und eine Anzeigeeinheit. Die Auswerteeinheit ist derart ausgebildet, dass diese in Abhängigkeit von Parametern einer festgelegten Fahrtstrecke eine Betriebsstrategie ermittelt, die von dem Fahrzeug automatisch durchgeführt wird. Die festgelegte Fahrtstrecke wird beispielsweise von einem Navigationssystem zur Verfügung gestellt. Die Parameter der festgelegten Fahrtstrecke sind beispielsweise die Art der Straße (z.B. Autobahn, Landstraße, innerstädtische Straßen, Umweltzonen), Steigung (Gefälle) der Straßen, Baustellen und/oder die Fahrtstrecke betreffende Verkehrsinformationen und/oder Verfügbarkeit und Lage von Tankstationen und/oder Ladestationen entlang der Fahrtstrecke. Dabei sind beliebige Kombinationen der beispielhaft aufgezählten Parameter möglich. Auf der Anzeigeeinheit wird die festgelegte Fahrtstrecke dargestellt, wobei Abschnitten der Fahrtstrecke grafisch und/oder alphanumerisch die jeweilige Betriebsart zugeordnet ist. Die Unterteilung der Betriebsart ist dabei abhängig von den jeweils vorhandenen unterschiedlichen Betriebsarten. Beispielsweise kann ein Hybridfahrzeug verschiedene Betriebsarten mit aktiver Verbrennungskraftmaschine aufweisen. Erfindungsgemäß kann dann sowohl vorgesehen sein, dass diese Unterteilung auch dargestellt wird oder aber nur eine übergeordnete Betriebsart dargestellt wird, bei einem Hybridfahrzeug beispielsweise nur die beiden Betriebsarten "rein elektrisch" und "aktive Verbrennungskraftmaschine". Die Darstellung auf der Anzeigeeinheit kann dabei beispielsweise eine 2D- oder 3D- Kartendarstellung sein. Alternativ kann die Darstellung eine 1D-Darstellung oder eine Listendarstellung sein. Zusätzlich zu der jeweiligen Betriebsart wird ein grafisches und/oder alphanumerisches Element angezeigt, das die Wahl der Betriebsart erläutert. Hierdurch erkennt der Nutzer, warum das System eine bestimmte Betriebsart ausgewählt hat bzw. warum an irgendeiner Stelle auf der Fahrtstrecke die Betriebsart gewechselt wird. Hierdurch wird die Betriebsstrategie für den Nutzer transparent bzw. transparenter, sodass dieser eine bessere Entscheidungsgrundlage für einen manuellen Eingriff hat (falls dieser vorhanden ist) bzw. diesen unterlässt.

Dabei kann manuell eine Betriebsart oder die Betriebsstrategie geändert werden. Beispielsweise kann der Nutzer die gewählte Betriebsart für einen Streckenabschnitt ändern, was dann streng genommen auch eine Änderung der Betriebsstrategie (als Summe der jeweiligen Betriebsarten über den jeweiligen Abschnitten) ist. Dabei muss dann nach der manuellen Eingabe die Auswerteeinheit überprüfen, ob dies Folgen für die weitere Betriebsstrategie hat. Dabei kann vorgesehen sein, dass nach der manuellen Eingabe die Folgen zunächst berechnet werden und der Nutzer unter Kenntnis dieser Folgen die manuelle Änderung bestätigen muss. Weiter kann vorgesehen sein, dass der Nutzer manuell auf eine Betriebsart umschaltet, die dann, solange es möglich ist, beibehalten wird. Beispielsweise schaltet der Nutzer manuell auf "rein elektrisches Fahren" um, was dann solange ausgeführt wird, bis die Traktionsbatterie leer ist.

Weiter ermittelt die Auswerteeinheit in Abhängigkeit eines erfassten und/oder vorausberechneten Ladezustandes einer Traktionsbatterie und/oder eines Füllstandes eines Kraftstofftanks Ladeempfehlungen und/oder Tankempfehlungen, die dann auf der Anzeigeeinheit an dem betreffenden Abschnitt der Fahrtstrecke angezeigt werden.

Weiter ist die Auswerteeinheit derart ausgebildet, dass bei Auswahl einer Ladeempfehlung und/oder einer Tankempfehlung mindestens einer Ladestation und/oder Tankstation angezeigt wird, wobei aufgrund der Eingabe mindestens eines Lade- und/oder Tankparameters die Auswerteeinheit eine angepasste Betriebsstrategie berechnet und auf der Anzeigeeinheit darstellt. Dabei ist der Ladeparameter eine Ladezeit oder eine Tankmenge. Somit kann die Auswerteeinheit die Lade- oder Tankmenge sehr genau schätzen. Vorzugsweise kann dabei der Nutzer aus vorgewählten Ladezeiten auswählen.

Dabei kann weiter vorgesehen sein, dass die aktuelle Betriebsstrategie und die angepasste Betriebsstrategie aufgrund einer empfohlenen Ladung bzw. Betankung überlagernd auf der Anzeigeeinheit dargestellt werden. Dadurch kann der Nutzer beispielsweise durch Variation der Ladezeit feststellen, inwieweit dies Auswirkungen auf die Betriebsstrategie hat.

In einer Ausführungsform berücksichtigt die Auswerteeinheit Nutzer-Prioritäten bei der Ermittlung der Betriebsstrategie. Eine Nutzer-Priorität ist beispielsweise, den letzten Abschnitt vor dem Erreichen des Ziels rein elektrisch zu fahren.

In einer weiteren Ausführungsform passt die Auswerteeinheit abhängig von Fahrzeugdaten und/oder externen Informationen die gewählte Betriebsstrategie an. Die Fahrzeugdaten sind beispielsweise die Kraftfahrzeuggeschwindigkeit und/oder der Ladezustand der Traktionsbatterie und/oder der Füllstand des Kraftstofftanks. Ergibt beispielsweise eine sehr niedrige Geschwindigkeit auf der Autobahn, dass vermutlich ein Stau vorliegt, so kann auf "rein elektrische" Fahrt umgestellt werden. Des Weiteren kann sich durch unvorhergesehene Bedingungen der Energieverbrauch erhöht haben. Dies wird dann nahezu in Echtzeit von der Auswerteeinheit berücksichtigt. Die externen Informationen sind insbesondere aktuelle Verkehrsnachrichten für die Fahrtstrecke, die dann ebenfalls für eine nachträgliche Anpassung der Betriebsstrategie herangezogen werden können.

In einer weiteren Ausführungsform sind auf der Anzeigeeinheit eine elektrische Restreichweite und/oder eine Gesamt-Reichweite dargestellt. Insbesondere im Zusammenhang mit der angepassten Betriebsstrategie aufgrund eines angenommenen Ladevorganges kann der Nutzer dann unmittelbar erkennen, was eine Variation der Ladezeit für Auswirkungen auf Betriebsstrategie und Reichweite hat.

In einer weiteren Ausführungsform ist die Auswerteeinheit derart ausgebildet, das mittels eines Eingabeelements zwischen zwei Darstellungsarten der Fahrtstrecke umgeschaltet wird. So kann beispielsweise zwischen einer 2D-Kartendarstellung und einer 1D-Kartendarstellung und/oder Listendarstellung umgeschaltet werden, da verschiedene Informationen unterschiedlich einfach in den unterschiedlichen Darstellungen erfassbar sind.

Hinsichtlich der verfahrensmäßigen Ausgestaltung kann vollinhaltlich auf die vorangegangen Ausführungen zur Vorrichtung Bezug genommen werden.

Die Erfindung wird nachfolgend anhand bevorzugter Ausführungsbeispiele näher erläutert werden. Die Figuren zeigen:
- Fig. 1: ein schematisches Blockschaltbild einer Vorrichtung zur Darstellung einer Betriebsstrategie eines Hybridfahrzeugs,
- Fig. 2: eine beispielhafte Darstellung auf der Anzeigeeinheit in einer 2D-Kartendarstellung,
- Fig. 3: eine beispielhafte Darstellung eines Teils der Fahrtstrecke gemäß Fig. 2 in Form einer Liste,
- Fig. 4: eine beispielhafte Darstellung einer 1D-Darstellung bei manueller Umschaltung auf rein elektrischen Fahrbetrieb und
- Fig. 5: eine beispielhafte Darstellung einer 1D-Darstellung gemäß Fig. 4 mit einer erfolgten Tankplanung.

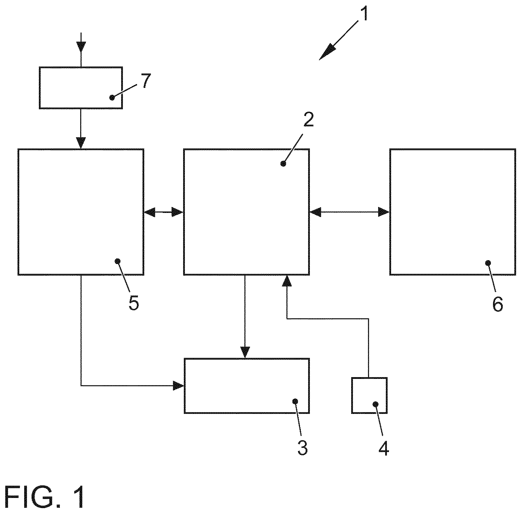

In der Fig. 1 ist eine Vorrichtung 1 zur Darstellung einer Betriebsstrategie eines Hybridfahrzeugs dargestellt, die eine Auswerteeinheit 2 und eine Anzeigeeinheit 3 aufweist. Des Weiteren umfasst die Vorrichtung 1 mindestens ein Eingabeelement 4. Dabei kann das mindestens eine Eingabeelement eine Touch-Screen-Bedienung der Anzeigeeinheit 3 sein und/oder als Taster ausgebildet sein. Ebenso kann das Eingabeelement 4 als Sprachsteuerung ausgebildet sein. Die Auswerteeinheit 2 ist mit der Anzeigeeinheit 3 verbunden. Weiter ist die Auswerteeinheit 2 mit einem Navigationssystem 5 und mindestens einem Steuergerät 6 für den Antrieb verbunden. Das Steuergerät 6 ist beispielsweise ein Hybridsteuergerät oder ein Motorsteuergerät. Das Navigationssystem 5 ist mit der Anzeigeeinheit 3 verbunden. Alternativ kann dieser Datentransfer auch ausschließlich über die Auswerteeinheit 2 erfolgen. Weiter ist das Navigationssystem 5 mit einem Modul 7 zum Empfang von Verkehrsnachrichten verbunden. Zusätzlich oder alternativ kann dieses Modul 7 auch mit der Auswerteeinheit 2 verbunden sein.

Die prinzipielle Arbeitsweise der Vorrichtung ist wie folgt. Aufgrund von Eingaben des Nutzers berechnet das Navigationssystem eine Fahrtstrecke zu einem Zielpunkt. Diese Fahrtstrecke kann auch offline berechnet und in das Navigationssystem 5 eingespielt werden. Bei der Routenplanung berücksichtigt das Navigationssystem 5 aktuelle Verkehrsmeldungen des Moduls 7. Ausgehend von dieser berechneten Fahrtstrecke als Ergebnis der Routenplanung berechnet nun die Auswerteeinheit 2 eine Betriebsstrategie für das Hybridfahrzeug unter Berücksichtigung von Parametern der Fahrtstrecke. Diese sind in einer digitalen Straßenkarte des Navigationssystems 5 abgelegt. Beispiele für derartige Parameter sind beispielsweise Straßenart, erwartete Verkehrsflussarten, Verkehrszonen und Steigungen der Fahrstrecke. Weiter berücksichtigt die Auswerteeinheit 2 Nutzer-Prioritäten, die beispielsweise vorab über das Eingabeelement 4 eingegeben wurden. Eine solche Nutzer-Priorität ist beispielsweise, dass die letzten Kilometer vor dem Ziel rein elektrisch gefahren werden sollen. Schließlich berücksichtigt die Auswerteeinheit 2 auch noch den Ladezustand einer Traktionsbatterie und den Füllstand eines Kraftstofftanks auch in Vorausschau auf zukünftig geplante Lade- und/oder Tankstopps. Diese Daten erhält die Auswerteeinheit 2 vom Steuergerät 6.

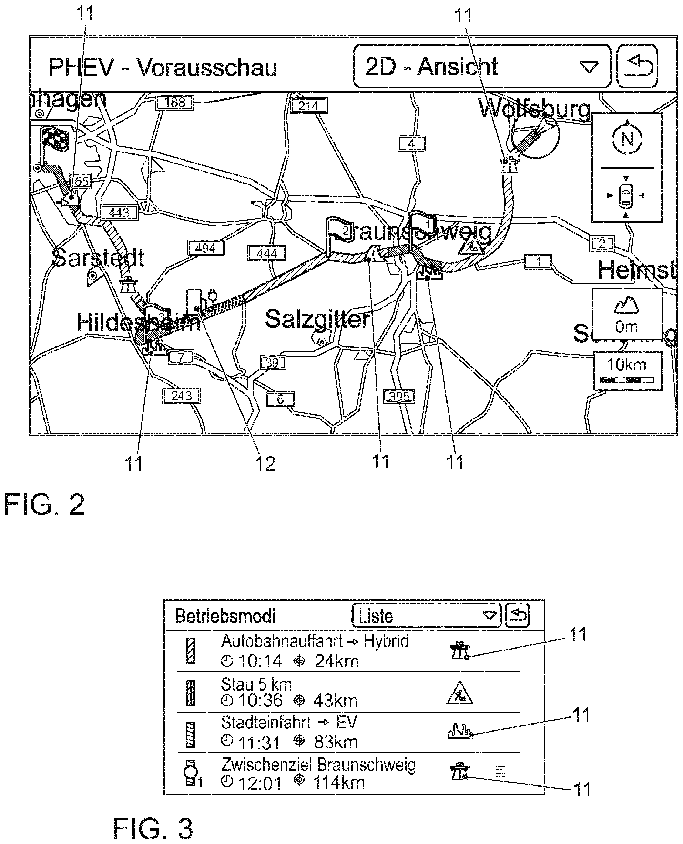

Eine solche berechnete Betriebsstrategie ist in der Fig. 2 dargestellt. Dabei wird den Abschnitten der Fahrtstrecke je nach zugeordneter Betriebsart beispielsweise eine andere Farbe zugeordnet, was in der Darstellung durch unterschiedliche Schraffuren gekennzeichnet ist. Zusätzlich ist jedem Abschnitt der Fahrtstrecke mindestens ein grafisches und/oder alphanumerisches Element 11 zugeordnet, das die Wahl der Betriebsart erläutert. Beispielsweise ist für den zweiten Abschnitt nach Verlassen von Wolfsburg ein Fahrbetrieb mit aktiver Verbrennungskraftmaschine vorgesehen. Das Element 11 zeigt ein Piktogramm einer Autobahn, was erläutert, warum in diesem Abschnitt mit aktiver Verbrennungskraftmaschine gefahren werden soll. Entsprechend ist an der Stadtgrenze von Braunschweig als erstem Zwischenziel (gekennzeichnet durch die Fahne mit der 1) ein Element 11 dargestellt, das eine Stadt zeigt. Dieses Element 11 erläutert, warum dieser Abschnitt rein elektrisch befahren werden soll. Hinter der Stadt Braunschweig ist ein weiteres Element 11 angeordnet, das eine Überlandstraße kennzeichnet und so erläutert, warum wieder mit aktiver Verbrennungskraftmaschine gefahren wird. Dabei wird das zweite Zwischenziel (gekennzeichnet durch die Fahne mit der 2) passiert. Vor dem dritten Zwischenziel ist eine Ladeempfehlung 12 dargestellt. In diesem Bereich ist der zugehörige Abschnitt sowohl mit der Farbe für aktive Verbrennungskraftmaschine als auch mit einer Farbe für "mögliches rein elektrisches Fahren" gekennzeichnet, wobei diese Farbe beispielsweise etwas heller als die Farbe für "rein elektrisches Fahren" ist. Dabei erhält der Nutzer die Information, dass, wenn dieser die Ladeempfehlung annimmt, auf rein elektrisches Fahren umgeschaltet wird, beispielsweise um den Ladezustand der Traktionsbatterie vor dem Ladevorgang gezielt zu erniedrigen. Das Element 11 vor Hildesheim zeigt eine Stadt, sodass der Nutzer weiß, dass deshalb auf "rein elektrisches Fahren" umgeschaltet wird. Anschließend zeigt ein Element 11 eine Autobahn und der Abschnitt soll mit aktiver Verbrennungskraftmaschine befahren werden. Schließlich zeigt das letzte Element 11 ein Haus mit Pfeil, das erläutert, dass dort eine festgelegte Entfernung zum Zielpunkt erreicht wird und aufgrund der Nutzer-Priorität wieder auf rein elektrisches Fahren umgeschaltet wird.

Dabei ist der Darstellung in Fig. 2 weiter zu entnehmen, dass aufgrund des Ladezustandes und des Füllzustandes des Kraftstofftanks der Zielpunkt erreichbar ist. Andernfalls wird der nicht erreichbare Teil der Fahrtstrecke optisch anders gekennzeichnet, was später noch näher erläutert wird.

Wählt der Nutzer die Ladeempfehlung 12 aus, so werden geeignete Ladestationen mittels der Datenbasis des Navigationssystems 5 gesucht und angezeigt. Dabei kann dann vorgesehen sein, dass der Nutzer eine Ladestation auswählt und eine gewünschte Ladezeit auswählt. Abhängig von diesen Eingaben kann dann die Vorrichtung 1 eine mögliche angepasste Betriebsstrategie berechnen und darstellen. Da der Ladevorgang jedoch in Realität noch nicht durchgeführt wurde, bleibt die aktuelle Betriebsstrategie zunächst noch aktiv. Dabei kann vorgesehen sein, dass diese überlagernd zusammen oder wechselweise einzeln darstellbar sind. Dabei sei angemerkt, dass die Vorgehensweise bei einer Tankempfehlung entsprechend ist.

Die Vorrichtung 1 reagiert des Weiteren auch auf aktuelle Änderungen wie beispielsweise Verkehrsinformationen. Des Weiteren können geänderte Bedingungen entlang der Fahrtstrecke zu einer Anpassung der Betriebsstrategie führen. Bewirkt beispielsweise die dargestellte Baustelle einen Stau, bei dem das Fahrzeug nur noch in Stop and Go sich fortbewegen kann, kann auf rein elektrisches Fahren umgeschaltet werden, da dies energetisch günstiger ist.

Des Weiteren kann vorgesehen sein, dass der Nutzer für einzelne Abschnitte die Betriebsart ändern kann, beispielsweise über das Eingabeelement 4. In diesem Fall berechnet die Auswerteeinheit 2 eine neue Betriebsstrategie auf Grundlage der manuellen Vorgabe. Weiter sei angemerkt, dass die berechnete Betriebsstrategie der Auswerteeinheit 2 an das Steuergerät 6 übermittelt werden kann und von dieser dann automatisch umgesetzt wird.

In der Fig. 3 ist eine alternative Darstellung zur 2D-Kartendarstellung gemäß Fig. 2 dargestellt, wobei die Betriebsarten (Betriebsmodi) wieder durch unterschiedliche Farben (dargestellt durch unterschiedliche Schraffuren) hervorgehoben werden. Bei der Baustelle ist eine weitre Schraffur neben der Betriebsart "aktuelle Vertrennungskraftmaschine" dargestellt, die als Gefahrenhinweis dient und beispielsweise rot ist. Das erste Zwischenziel ist dabei als kleiner Kreis in dem Balken der Betriebsart gekennzeichnet.

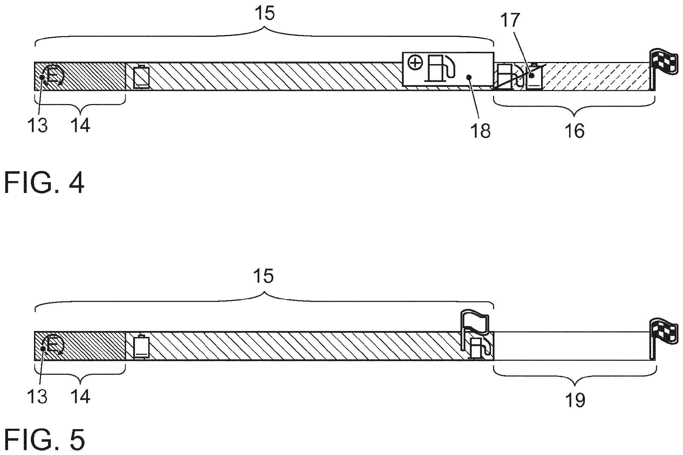

Über ein Eingabeelement 4 kann der Nutzer jederzeit manuell die Betriebsstrategie überstimmen und beispielsweise auf rein elektrisches Fahren umschalten. Eine solche Situation ist in Fig. 4 in einer 1D-Darstellung gezeigt. Die manuelle Umschaltung ist dabei durch ein Element 13 angezeigt. Dabei ist eine elektrische Restreichweite 14 dargestellt. Durch die geänderte Farbe bzw. Schraffur wird dann die Gesamt-Reichweite 15 dargestellt. Der nicht erreichbare Teil 16 bis zum Zielpunkt wird dann optisch anders dargestellt zusammen mit einem Symbol 17 für eine leere Traktionsbatterie und einen leeren Kraftstofftank. Daher wird eine Tankempfehlung 18 eingeblendet. Wird diese ausgewählt, erfolgt wieder eine Suche nach geeigneten Tankstellen. Wählt der Nutzer eine Tankempfehlung aus, so ändert sich die Darstellung, wobei der zuvor nicht erreichbare Teil 16 nun optisch anders dargestellt ist, da der Zielpunkt nun vorbehaltlich des Tankvorganges erreicht wird. Dieser mögliche Teil 19 ist in Fig. 5 dargestellt.

## Patentansprüche

1. Vorrichtung (1) zur Darstellung einer Betriebsstrategie eines Hybridfahrzeugs, die von einem Steuergerät (6) des Fahrzeugs automatisch durchgeführt wird, umfassend eine Auswerteeinheit (2), die derart ausgebildet ist, dass diese mindestens in Abhängigkeit von Parametern einer festgelegten Fahrtstrecke eine Betriebsstrategie ermittelt, und mindestens eine Anzeigeeinheit (3), auf der die festgelegte Fahrtstrecke dargestellt ist, wobei Abschnitten der Fahrtstrecke grafisch und/oder alphanumerisch die jeweilige Betriebsart zugeordnet ist, wobei mittels mindestens eines Eingabeelements (4) manuell eine dargestellte Betriebsart oder die Betriebsstrategie geändert werden kann, wobei zusätzlich zu der jeweiligen Betriebsart ein grafisches und/oder alphanumerisches Element (11) angezeigt ist, das die Wahl der Betriebsart erläutert, **dadurch gekennzeichnet, dass** die Auswerteeinheit (2) derart ausgebildet ist, dass diese in Abhängigkeit eines erfassten und/oder eines vorausberechneten Ladezustandes einer Traktionsbatterie und/oder eines Füllzustandes eines Kraftstofftanks Ladeempfehlungen (12) und/oder Tankempfehlungen (18) ermittelt und an der dargestellten Fahrtstrecke anzeigt, wobei bei Anwahl einer Ladeempfehlung (12) und/oder einer Tankempfehlung (18) mindestens eine Ladestation und/oder Tankstation angezeigt wird, wobei aufgrund der Eingabe mindestens eines Lade- und/oder Tankparameters die Auswerteeinheit (2) eine angepasste Betriebsstrategie berechnet und auf die Anzeigeeinheit (3) darstellt, wobei der Lade- oder Tankparameter eine Ladezeit oder eine Tankmenge ist, und die Auswerteeinheit dazu ausgebildet ist, die Lade- oder Tankmenge auf Basis des Lade- oder Tankparameters zu schätzen.

2. Vorrichtung nach Anspruch 1, **dadurch gekennzeichnet, dass** die Auswerteeinheit (2) derart ausgebildet ist, dass vorgegebene Nutzer-Prioritäten bei der Ermittlung der Betriebsstrategien berücksichtigt werden.

3. Vorrichtung nach Anspruch 1 oder 2, **dadurch gekennzeichnet, dass** die Auswerteeinheit (2) derart ausgebildet ist, dass diese abhängig von Fahrzeugdaten und/oder externen Informationen die gewählte Betriebsstrategie anpasst.

4. Vorrichtung nach einem der vorangegangenen Ansprüche, **dadurch gekennzeichnet, dass** die Auswerteeinheit (2) derart ausgebildet ist, dass die aktuelle und die angepasste Betriebsstrategie überlagernd auf der Anzeigeeinheit (3) dargestellt werden.

5. Vorrichtung nach einem der vorangegangenen Ansprüche, **dadurch gekennzeichnet, dass** eine elektrische Restreichweite (14) und/oder eine Gesamt-Restreichweite (15) auf der Anzeigeeinheit (3) dargestellt sind.

6. Vorrichtung nach einem der vorangegangenen Ansprüche, **dadurch gekennzeichnet, dass** die Auswerteeinheit (2) derart ausgebildet ist, dass mittels eines Eingabeelements (4) zwischen zwei Darstellungsarten der Fahrtstrecke umgeschaltet wird.

7. Verfahren zur Darstellung einer Betriebsstrategie eines Hybridfahrzeugs, die von einem Steuergerät (6) des Fahrzeugs automatisch durchgeführt wird, mittels einer Auswerteeinheit (2), die mindestens in Abhängigkeit von Parametern einer festgelegten Fahrtstrecke die Betriebsstrategie ermittelt, und mindestens einer Anzeigeeinheit (3), auf der die festgelegte Fahrtstrecke dargestellt ist, wobei Abschnitten der Fahrtstrecke grafisch und/oder alphanumerisch die jeweilige Betriebsart zugeordnet ist, wobei die Auswerteeinheit (2) die berechnete Betriebsstrategie an das Steuergerät (6) übermittelt, wobei mittels mindestens eines Eingabeelements (4) manuell eine dargestellte Betriebsart oder die Betriebsstrategie geändert werden kann, wobei zusätzlich zu der jeweiligen Betriebsart ein grafisches und/oder alphanumerisches Element (11) angezeigt ist, das die Wahl der Betriebsart erläutert, **dadurch gekennzeichnet, dass** die Auswerteeinheit (2) in Abhängigkeit eines erfassten und/oder eines vorausberechneten Ladezustandes einer Traktionsbatterie und/oder eines Füllstandes eines Kraftstofftanks Ladeempfehlungen (12) und/oder Tankempfehlungen (18) ermittelt und an der dargestellten Fahrtstrecke anzeigt, wobei bei Auswahl einer Ladeempfehlung (12) und/oder einer Tankempfehlung (18) mindestens eine Ladestation und/oder Tankstation angezeigt wird, wobei aufgrund der Eingabe mindestens eines Lade- und/oder Tankparameters die Auswerteeinheit (2) eine angepasste Betriebsstrategie berechnet und auf die Anzeigeeinheit (3) dargestellt ist, wobei der Lade- oder Tankparameter eine Ladezeit oder eine Tankmenge ist, und die Auswerteeinheit dazu ausgebildet ist, die Lade- oder Tankmenge auf Basis des Lade- oder Tankparameters zu schätzen.

## Claims

1. Apparatus (1) for presenting an operating strategy for a hybrid vehicle, which is automatically carried out by a control device (6) of the vehicle, comprising an evaluation unit (2) which is designed to determine an operating strategy at least on the basis of parameters of a determined route, and at least one display unit (3) on which the determined route is presented, wherein the respective operating mode is graphically and/or alphanumerically assigned to sections of the route, wherein a presented operating mode or the operating strategy can be manually changed by means of at least one input element (4), wherein, in addition to the respective operating mode, a graphical and/or alphanumeric element (11) which explains the selection of the operating mode is displayed, **characterized in that** the evaluation unit (2) is designed to determine charging recommendations (12) and/or fuelling recommendations (18) on the basis of a detected and/or predicted state of charge of a traction battery and/or a filling level of a fuel tank and to display them on the presented route, wherein, if a charging recommendation (12) and/or a fuelling recommendation (18) is selected, at least one charging station and/or filling station is displayed, wherein the evaluation unit (2) calculates an adapted operating strategy on the basis of the input of at least one charging and/or fuelling parameter and presents it on the display unit (3), wherein the charging or fuelling parameter is a charging time or a fuelling amount, and the evaluation unit is designed to estimate the charging or fuelling amount on the basis of the charging or fuelling parameter.

2. Apparatus according to Claim 1, **characterized in that** the evaluation unit (2) is designed such that predefined user priorities are taken into account when determining the operating strategies.

3. Apparatus according to Claim 1 or 2, **characterized in that** the evaluation unit (2) is designed to adapt the selected operating strategy on the basis of vehicle data and/or external information.

4. Apparatus according to one of the preceding claims, **characterized in that** the evaluation unit (2) is designed such that the current operating strategy and the adapted operating strategy are presented on the display unit (3) in a superimposed manner.

5. Apparatus according to one of the preceding claims, **characterized in that** an electrical remaining range (14) and/or a total remaining range (15) is/are presented on the display unit (3).

6. Apparatus according to one of the preceding claims, **characterized in that** the evaluation unit (2) is designed such that an input element (4) is used to change over between two ways of presenting the route.

7. Method for presenting an operating strategy for a hybrid vehicle, which is automatically carried out by a control device (6) of the vehicle, by means of an evaluation unit (2) which determines the operating strategy at least on the basis of parameters of a determined route, and at least one display unit (3) on which the determined route is presented, wherein the respective operating mode is graphically and/or alphanumerically assigned to sections of the route, wherein the evaluation unit (2) transmits the calculated operating strategy to the control device (6), wherein a presented operating mode or the operating strategy can be manually changed by means of at least one input element (4), wherein, in addition to the respective operating mode, a graphical and/or alphanumeric element (11) which explains the selection of the operating mode is displayed, **characterized in that** the evaluation unit (2) determines charging recommendations (12) and/or fuelling recommendations (18) on the basis of a detected and/or predicted state of charge of a traction battery and/or a filling level of a fuel tank and displays them on the presented route, wherein, if a charging recommendation (12) and/or a fuelling recommendation (18) is selected, at least one charging station and/or filling station is displayed, wherein the evaluation unit (2) calculates an adapted operating strategy on the basis of the input of at least one charging and/or fuelling parameter and presents it on the display unit (3), wherein the charging or fuelling parameter is a charging time or a fuelling amount, and the evaluation unit is designed to estimate the charging or fuelling amount on the basis of the charging or fuelling parameter.

## Revendications

1. Dispositif (1) permettant de représenter une stratégie de fonctionnement d'un véhicule hybride qui est effectuée automatiquement par un appareil de commande (6) du véhicule, comprenant une unité d'évaluation (2) qui est réalisée de telle sorte qu'elle détermine une stratégie de fonctionnement au moins en fonction des paramètres d'un trajet donné, et comprenant au moins une unité d'affichage (3) sur laquelle le trajet donné est représenté, dans lequel le mode de fonctionnement respectif est associé de manière graphique et/ou alphanumérique à des tronçons du trajet, dans lequel au moins un élément d'entrée (4) permet de modifier manuellement un mode de fonctionnement représenté ou la stratégie de fonctionnement représentée, dans lequel en plus du mode de fonctionnement respectif, un élément graphique et/ou alphanumérique (11) est affiché qui illustre la sélection du mode de fonctionnement,
**caractérisé en ce que** l'unité d'évaluation (2) est réalisée de telle sorte qu'elle détermine en fonction d'un état de charge d'une batterie de traction, détecté et/ou préalablement calculé, et/ou d'un niveau de remplissage d'un réservoir de carburant des recommandations de charge (12) et/ou des recommandations de ravitaillement en carburant (18) et les affiche au niveau du trajet représenté, dans lequel au moins une station de charge et/ou une station-service est/sont affichée(s) lors de la sélection d'une recommandation de charge (12) et/ou d'une recommandation de ravitaillement en carburant (18), dans lequel l'unité d'évaluation (2) calcule une stratégie de fonctionnement adaptée en raison de l'entrée d'au moins un paramètre de charge et/ou de ravitaillement en carburant et la représente sur l'unité d'affichage (3), dans lequel le paramètre de charge ou de ravitaillement en carburant est un temps de charge ou une quantité de carburant, et l'unité d'évaluation est réalisée pour estimer la quantité de charge ou de carburant sur la base du paramètre de charge ou de ravitaillement en carburant.

2. Dispositif selon la revendication 1, **caractérisé en ce que** l'unité d'évaluation (2) est réalisée de telle sorte que des priorités d'utilisateur prédéfinies sont prises en compte lors de la détermination des stratégies de fonctionnement.

3. Dispositif selon la revendication 1 ou 2, **caractérisé en ce que** l'unité d'évaluation (2) est réalisée de telle sorte qu'elle adapte la stratégie de fonctionnement sélectionnée en fonction de données de véhicule et/ou d'informations externes.

4. Dispositif selon l'une quelconque des revendications précédentes, **caractérisé en ce que** l'unité d'évaluation (2) est réalisée de telle sorte que la stratégie de fonctionnement actuelle et la stratégie de fonctionnement adaptée sont représentées en superposition sur l'unité d'affichage (3).

5. Dispositif selon l'une quelconque des revendications précédentes, **caractérisé en ce qu'**une autonomie résiduelle électrique (14) et/ou une autonomie résiduelle totale (15) est/sont représentée(s) sur l'unité d'affichage (3).

6. Dispositif selon l'une quelconque des revendications précédentes, **caractérisé en ce que** l'unité d'évaluation (2) est réalisée de telle sorte qu'un élément d'entrée (4) permet de commuter entre deux types de représentation du trajet.

7. Procédé permettant de représenter une stratégie de fonctionnement d'un véhicule hybride, qui est effectuée automatiquement par un appareil de commande (6) du véhicule, au moyen d'unité d'évaluation (2) qui détermine la stratégie de fonctionnement au moins en fonction de paramètres d'un trajet donné, et au moyen d'au moins une unité d'affichage (3) sur laquelle le trajet donné est représenté, dans lequel le mode de fonctionnement respectif est associé de manière graphique et/ou alphanumérique à des tronçons du trajet, dans lequel l'unité d'évaluation (2) transmet la stratégie de fonctionnement calculée à l'appareil de commande (6), dans lequel au moins un élément d'entrée (4) permet de modifier manuellement un mode de fonctionnement représenté ou la stratégie de fonctionnement, dans lequel en plus du mode de fonctionnement respectif, un élément graphique et/ou alphanumérique (11) est affiché qui illustre la sélection du mode de fonctionnement,
**caractérisé en ce que** l'unité d'évaluation (2) détermine en fonction d'un état de charge d'une batterie de traction, détecté et/ou préalablement calculé, et/ou d'un niveau de remplissage d'un réservoir de carburant des recommandations de charge (12) et/ou des recommandations de ravitaillement en carburant (18) et les affiche au niveau du trajet représenté, dans lequel au moins une station de charge et/ou une station-service est/sont affichée(s) lors de la sélection d'une recommandation de charge (12) et/ou d'une recommandation de ravitaillement en carburant (18), dans lequel l'unité d'évaluation (2) calcule une stratégie de fonctionnement adaptée en raison de l'entrée d'au moins un paramètre de charge et/ou de ravitaillement en carburant et la représente sur l'unité d'affichage (3), dans lequel le paramètre de charge ou de ravitaillement en carburant est un temps de charge ou une quantité de carburant, et l'unité d'évaluation est réalisée pour estimer la quantité de charge ou de carburant sur la base du paramètre de charge ou de ravitaillement en carburant.
